# EUROPEAN PATENT APPLICATION

(11) **EP 3 633 117 A1**
(43) Date of publication of application: **08.04.2020**
(21) Application number: 18809114.4
(22) Date of filing: 01.06.2018
(51) Int. Cl.: E04C 2/296, E04F 13/072

(54) **SEALED PANEL STRUCTURE THAT CAN BE USED TO LINE SHOWER TRAYS AND SURFACES**

(30) Priority: 02.06.2017 ES 201730654 U
(71) Applicant: Pardo Esteban, José Ruperto, 12540 Villarreal (Castellón) (ES); Nicolau Munoz, Felipe, 12540 Villarreal Castellón (ES)
(72) Inventor: PARDO ESTEBAN, Jos Ruperto, 12540 Villarreal (Castell n) (ES)
(74) Representative: Ungria López, Javier
(86) International application number: PCT/ES2018/070403
(87) International publication number: WO 2018/220255

(57) **Abstract**

The invention comprises a main structure (1) made from an insulating material, plugs (3) that interrupt the continuity of the main structure (1), peripheral profiles (2) connected to the main structure (1), a first impermeable laminar body (7a) and a second impermeable laminar body (7b) covering, respectively, at least one upper surface and at least one lower surface of the main structure (1), said two surfaces being in opposite planes and said laminar bodies (7a, 7b) being connected to at least the main structure (1). The invention also comprises a decorative external layer (8) connected to the first laminar body (7a), said first laminar body being connected to at least the upper surface of the main structure (1). The profiles (2) extend along the entire periphery of the main structure (1).

## Description

### Object of the invention

The present invention relates to a sealed panel structure usable in linings of shower trays and surfaces which has a structural configuration to line surfaces of all types, although preferably the sealed panel structure is intended to be used in the manufacture of shower installations and shower cubicles; and also used for the shower trays themselves. These installations are provided with lining means which can be customised on their visible surfaces and at the same time ensure complete sealing to thus achieve protection against moisture from the surface on which it is installed; where the sealed panel structure of the invention is easy to install and has a low weight; all of which at a reasonable cost.

### Technical problem to be resolved and background of the invention

At present, shower installations and shower cubicles include vertical walls with a surface formed by ceramic pieces such as tiles and other similar elements, and in other cases said surface is formed by sheets of plastic material or similar, such that some of these installations sometimes produce moisture and filtrations due to the sealing of said surface having defects.

### Description of the invention

With the aim of achieving the objectives and avoiding the drawbacks mentioned in the preceding paragraphs, the invention proposes a sealed panel structure usable in linings of shower trays and surfaces.

It comprises:
- A main structure made from an insulating material.
- Plugs (3) that interrupt the continuity of the main structure.
- Peripheral profiles connected to the main structure; where said profiles extend along the entire periphery of the main structure.
- A first impermeable laminar body and a second impermeable laminar body covering, respectively, at least one upper surface and at least one lower surface of the main structure; said two surfaces of the main structure being in opposite planes; and said laminar bodies being connected to at least the main structure (1).
- A decorative external layer connected at least to the first laminar body, wherein the first laminar body is connected at least to the upper surface of the main structure.

The decorative external layer is connected to the first laminar body by means of an adhesive material.

The plugs have through holes configured to house a part of fixing screws which pass through the second laminar body.

The through holes of the plugs include castellated ends which are configured to house heads of the fixing screws.

The sealed panel structure usable in linings of shower trays comprises the main structure which includes a drain hole covered by means of a first annular protector and by means of a second annular protector.

The first annular protector covers an upper part of the drain hole and an annular area of an upper surface of the first laminar body, while the second annular protector covers a lower part of the drain hole and an annular area of a lower surface of the second laminar body.

The drain hole has a staggered portion on which the first annular protector is adapted, which includes an end flange which is fitted on a part of the second annular protector.

The main structure, the first laminar body and the second laminar body shape a structural assembly which includes angular grooves filled with a sealing material; wherein said angular grooves interrupt the continuity of the first laminar body and the main structure; and wherein said angular grooves separate various inclined planes descending towards the drain hole.

The structural assembly is connected along its periphery to the peripheral profiles by means the sealing material.

In one embodiment of the invention, the laminar bodies connected to the main structure are also connected to opposite surfaces of the peripheral profiles, wherein said opposite surfaces are coplanar with the opposite surfaces of the main structure.

The peripheral profiles include male elements and female elements wherein said elements are configured to couple adjacent sealed panel structures; wherein said peripheral profiles comprise a tubular structure.

In order to aid a better understanding of this specification and forming an integral part thereof, a series of figures are included below in which, in an illustrative and non-limiting manner, the object of the invention is represented.

### Brief description of the figures

**Figure 1** shows a sectional view of the sealed panel structure usable in linings of a surface according to a first embodiment of the invention.
**Figure 2** shows a sectional view of parts of two sealed panel structures which are connected together by means of a tongue and groove coupling.
**Figure 3** represents another sectional view of a part of the sealed panel structure of the invention wherein means for fixing said sealed panel structure by way of screws are fundamentally shown.
**Figure 4** shows a perspective view of a sealed panel structure usable in a shower tray, according to a second embodiment of the invention.
**Figure 4a** shows a view of a part of the panel structure usable in the shower tray, wherein an angular cut provided for shaping the shower tray is highlighted.
**Figure 5** shows a plan view of a shower tray configured by means of the structure of the invention.
**Figure 6** shows a sectional view of a peripheral part of a shower tray configured by means of the structure of the invention.
**Figure 7** shows a sectional view of a drain hole of the shower tray; wherein two annular protectors covering said drain hole are highlighted.
**Figure 8** shows a sectional view of a shower tray with a drain device coupled on the drain hole.

### Description of an exemplary embodiment of the invention

Considering the numbering adopted in the figures, the sealed panel structure that can be used to line shower trays and surfaces comprises a main structure 1 made from an insulating material, such as for example polyurethane; peripheral profiles 2 of tubular structure and plugs 3 made from resin which interrupt the continuity of the main structure 1. The peripheral profiles 2 can be made from aluminium material and others.

Said plugs 3 have through holes 4 to be able to fix the panel to a wall 5 by means of screws 6 which pass through the through holes 4 which include castellated ends 4a to house heads of said screws 6.

The panel structure of the invention also includes a first laminar body 7a and a second laminar body 7b, which cover two opposite surfaces of the main structure 1: an upper surface and a lower surface; wherein said laminar bodies 7a, 7b are connected to the main structure 1; and wherein said laminar bodies 7a, 7b are made with an impermeable material such as for example fibreglass.

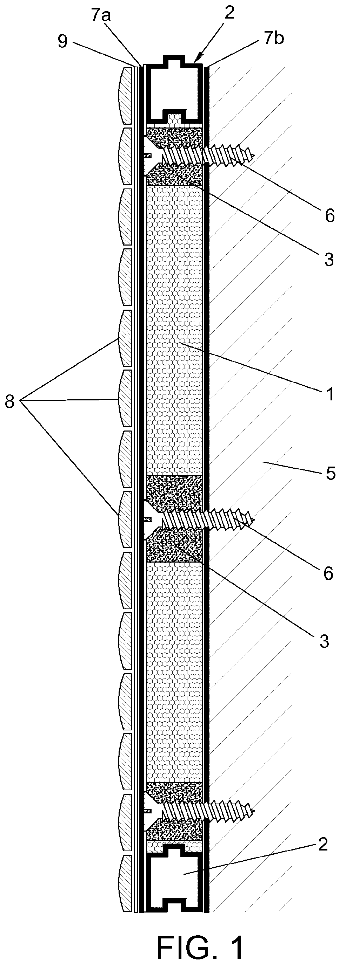

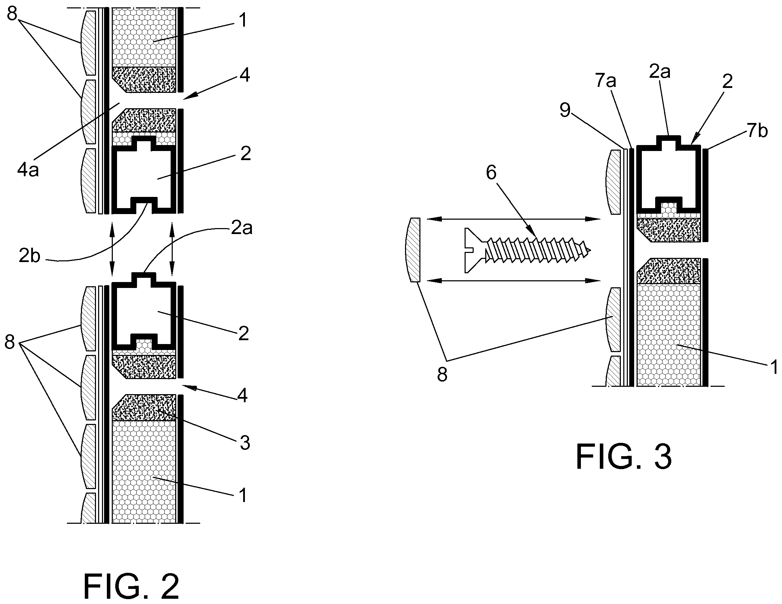

In the embodiment shown in Figures 1, 2 and 3, the laminar bodies 7a, 7b also cover opposite surfaces of the peripheral profiles 2; wherein said opposite surfaces are coplanar with the opposite surfaces of the main structure 1.

When the sealed panel structure is installed by means of the fixing screws 6, said screws 6 pass through the second laminar body 7b.

The panel structure also comprises a decorative external layer 8 which is fixed to the first laminar body 7a which is adhered to the upper surface of main structure 1; wherein said external layer 8 is connected to the laminar body 7a by means of an adhesive 9.

Thus, one of the novelties of the sealed panel structure of the invention is its structure formed by the main structure 1 of polyurethane or similar which is interrupted by the series of plugs 3 of resin to receive the fixing means such as the screws 6.

The sealed panel structure also comprises stiffening and assembly means by way of the peripheral profiles 2; wherein during assembly of two sealed panel structures, they are assembled by means of tongue and groove coupling of two adjacent profiles 2 of two different sealed panel structures; and wherein said tongue and groove coupling comprises male elements 2a and female elements 2b.

In order to improve the finish and the mechanical resistance of the lateral surface and to reinforce the assembly of elements forming the sealed panel structure of the invention, the first laminar body 7a and the second laminar body 7b manufactured with fibreglass, aluminium or other materials are incorporated.

On the first laminar body 7a, the conventional adhesive 9 is applied to fix the decorative external layer 8 formed by a number of decorative elements which can be of any type (tiles, stoneware, porcelain, wooden slabs, etc). In the embodiment shown in the figures, a number of diminutive glass mosaic elements have been selected to form a shower configuration or structure, for example.

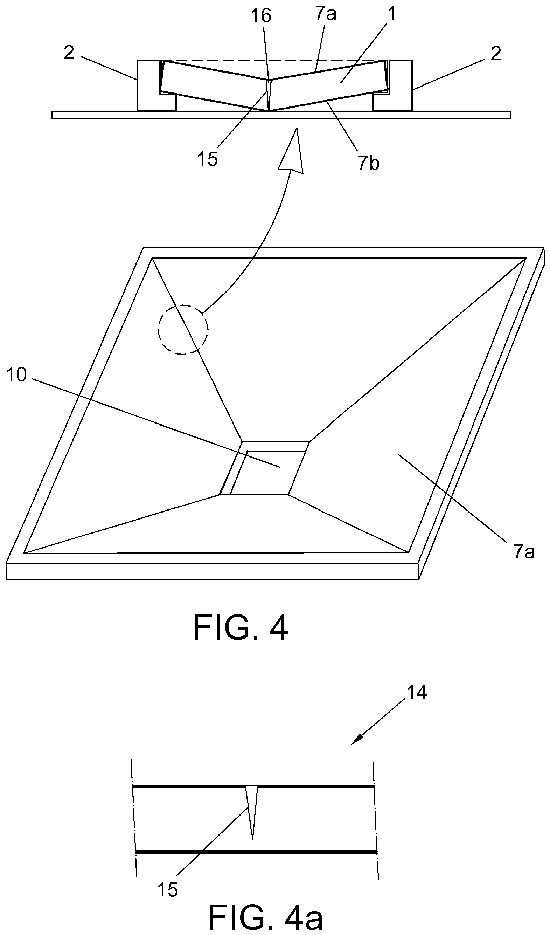

In Figures 1 to 3, a first embodiment of the sealed panel structure usable in linings of a surface is shown, while in Figures 4 to 8 a second embodiment of the sealed panel structure usable in a shower tray is shown.

Thus, in the second embodiment of the shower tray, the main structure 1 comprises a drain hole 10 covered by means of a first annular protector 11 and by means of a second annular protector 12.

The first annular protector 11 covers an upper part of the drain hole 10 and an annular area of an upper surface of the first laminar body 7a, while the second annular protector 12 covers a lower part of the drain hole 10 and an annular area of a lower surface of the second laminar body 7b.

The drain hole 10 has a staggered portion on which the first annular protector 11 is adapted, which includes an end flange 11a which is fitted on a part of the second annular protector.

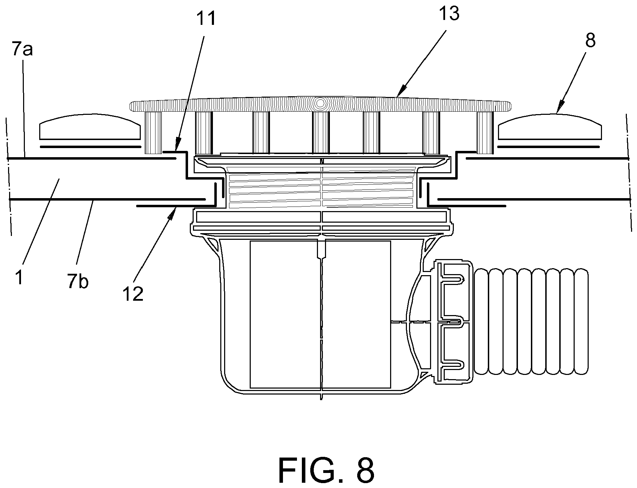

In Figure 8 the assembly of a drain device 13 installed on the drain hole 10 of the shower tray with interposition of annular protectors 11, 12 is shown.

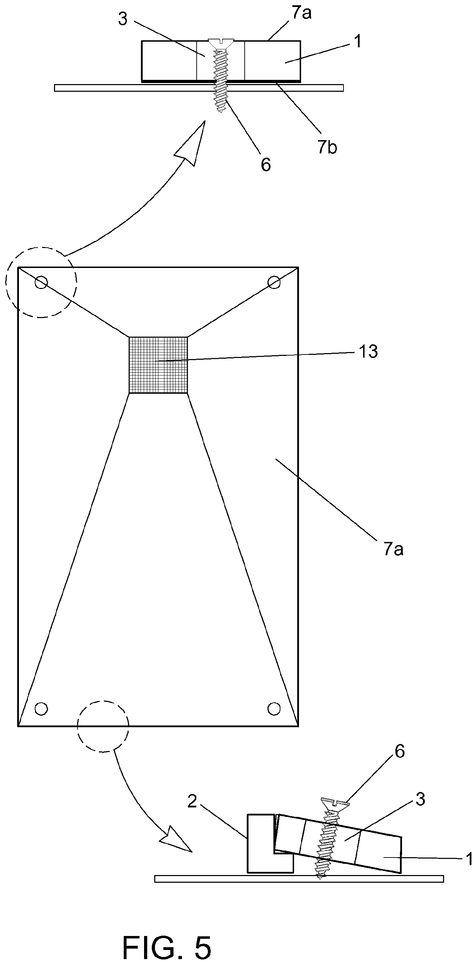

In one embodiment of the invention, in order to configure a shower tray (Figures 4 and 5), it proceeds from a flat structural assembly 14 formed by the main structure 1, by the first laminar body 7a and by the second laminar body 7b, such that angular grooves or cuts 15 are made on said structural assembly 15 which affect the first laminar body 7a and the main structure 1.

Then, said angular grooves 15 are filled with a sealing material 16 and the structural assembly 14 is folded along said angular grooves 15 to configure inclined planes of the shower tray such that, when folding the angular grooves 15 filled with the sealing material 16 the angular grooves 15 are narrowed; it being necessary to wait some time so that the adhesive material 16 dries.

In the embodiment described in the two previous paragraphs, the structural assembly 14 is connected along its periphery to the peripheral profiles 2 by means of said sealing material 16 such that in this case the first laminar body 7a and the second laminar body 7b do not cover the peripheral profiles 2.

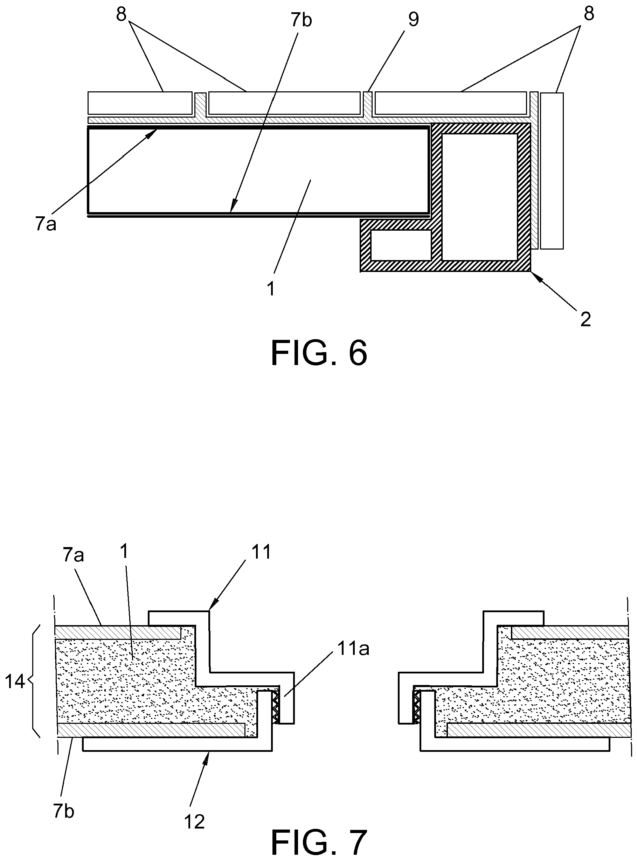

In Figure 6, the decorative layer 8 comprises a number of small pieces connected by means of the corresponding adhesive material 9 (sealing mastic) which also occupies narrows spaces (strips or grooves) delimited between said pieces of the decorative layer 8.

The decorative layer 8 also covers upper surfaces of the peripheral profiles 2 which are coplanar with an upper surface of the first laminar body 7a and said decorative layer also covers lateral edges of said profiles 2.

## Claims

1. **A sealed panel structure usable in linings of shower trays and surfaces, characterised in that** it comprises:
- a main structure (1) made from an insulating material,
- plugs (3) that interrupt the continuity of the main structure (1),
- peripheral profiles (2) connected to the main structure (1); wherein said profiles (2) extend along the entire periphery of the main structure (1);
- a first impermeable laminar body (7a) and a second impermeable laminar body (7b) covering, respectively, at least one upper surface and at least one lower surface of the main structure (1); said two surfaces of the main structure (1) being in opposite planes; and said laminar bodies (7a, 7b) being connected at least to the main structure (1);
- a decorative external layer (8) connected to the first laminar body (7a), wherein said first laminar body (7a) is connected at least to the upper surface of the main structure (1).

2. **The sealed panel structure usable in linings of shower trays and surfaces** according to claim 1, **characterised in that** the decorative external layer (8) is fixed to the first laminar body (7a) by means of an adhesive material (9).

3. **The sealed panel structure usable in linings of shower trays and surfaces** according to any one of the preceding claims, **characterised in that** the plugs (3) have through holes (4) configured to house a part of fixing screws (6) which pass through the second laminar body (7b).

4. **The sealed panel structure usable in linings of shower trays and surfaces** according to claim 3, **characterised in that** the through holes (4) of the plugs (3) include castellated ends (4a) which are configured to house heads of the fastening screws (6).

5. **The sealed panel structure usable in linings of shower trays and surfaces** according to any one of the preceding claims, **characterised in that** the sealed panel structure that can be used to line shower trays comprises the main structure (1) which includes a drain hole (10) covered by means of a first annular protector (11) and by means of a second annular protector (12); wherein the first annular protector (11) covers an upper part of the drain hole (10) and an annular area of an upper surface of the first laminar body (7a); and wherein the second annular protector (12) covers a lower part of the drain hole (10) and an annular area of a lower surface of the second laminar body (7b).

6. **The sealed panel structure usable in linings of shower trays and surfaces** according to claim 5, **characterised in that** the drain hole (10) has a staggered portion on which the first annular protector (11) is adapted which includes an end flange (11a) which is fitted on a part of the second annular protector (12).

7. **The sealed panel structure usable in linings of shower trays and surfaces** according to any one of the preceding claims 5 or 6, **characterised in that** the main structure (1), the first laminar body (7a) and the second laminar body (7b) shape a structural assembly (14) which includes angular grooves (15) filled with a sealing material (16); wherein said angular grooves (15) interrupt the continuity of the first laminar body (7a) and the main structure (1); and wherein said angular grooves (15) separate various inclined planes descending towards the drain hole (10).

8. **The sealed panel structure usable in linings of shower trays and surfaces** according to claim 7, **characterised in that** the structural assembly (14) is connected along its periphery to the peripheral profiles (2) by means of the sealing material (16).

9. **The sealed panel structure usable in linings of shower trays and surfaces** according to any one of the preceding claims 1 to 4, **characterised in that** the laminar bodies (7a, 7b) connected to the main structure (1) are also connected to opposite surfaces of the peripheral profiles (2); wherein said opposite surfaces are coplanar with the opposite surfaces of the main structure (1).

10. **The sealed panel structure usable in linings of shower trays and surfaces** according to any one of the preceding claims, **characterised in that** the peripheral profiles (2) include male elements (2a) and female elements (2b) wherein some elements are configured to couple adjacent sealed panel structures.

11. **The sealed panel structure usable in linings of shower trays and surfaces** according to any one of the preceding claims, **characterised in that** the peripheral profiles (2) comprise a tubular structure.
